# EUROPEAN PATENT APPLICATION

(11) **EP 4 818 989 A1**
(43) Date of publication of application: **07.10.2026**
(21) Application number: 25305480.3
(22) Date of filing: 31.03.2025
(51) Int. Cl.: G06N 10/20, G06N 10/70, G06N 10/40

(54) **COMPUTER-IMPLEMENTED METHOD FOR CALCULATING A PLURALITY OF STEADY STATES OF AN OPEN QUANTUM SYSTEM**

(71) Applicant: Alice & Bob, 75015 Paris (FR)
(72) Inventor: MINGANTI, Fabrizio, 75015 Paris (FR); MELO, André, 75015 Paris (FR); BEUGNOT, Gaspard, 75015 Paris (FR)
(74) Representative: Atout PI Laplace

(57) **Abstract**

A computer implemented method for calculating a plurality of steady states of an open quantum system which is a physical quantum system being governed by a Lindblad master equation parametrized by a set of parameters *p* which characterize the physical quantum system and comprise fixed parameters and variable parameters, comprising the following operations:
a) based on an initial set of parameters *p*₀, reformulating (200) said Linblad master equation in the form $L \left(p\right) = {L}_{0} + {Δ}_{p} {L}_{1}$ where $p = {p}_{0} + Δp , {L}_{0} = L \left({p}_{0}\right)$, and 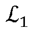 is a Liouvillian,
b) summing the trace superoperator T with a chosen complex coefficient *b* to 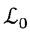 ,to obtain 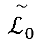 , and performing (210) a LU decomposition or an incomplete LU decomposition of 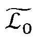 , after operation b), for each of a plurality of parameters sets {*pₖ*}*ₖ* such that *pₖ = p*₀ *+ Δₖ*,
c) computing (220) a candidate steady state *ρ̂ₖ* by
c1) determining a steady state basis {*ρ̂ₛₛ*^{(*n*)}}*ₙ,* where *n* is an integer smaller than a chosen maximum number *N*₀ of basis members, in which the first member is derived from b or Δ*ₖ,* and all basis members respect the condition ${{L}_{0}}^{˜} {{\hat{ρ}}_{ss}}^{\left(n\right)} = {L}_{1} {{\hat{ρ}}_{ss}}^{\left(n-1\right)}$ or ${{L}_{0}}^{˜} {{\hat{ρ}}_{ss}}^{\left(n\right)} = \left({{L}_{0}}^{˜}+{Δ}_{k}{L}_{1}\right) {{\hat{ρ}}_{ss}}^{\left(n-1\right)}$ for n>0, using the decomposition from operation a),
c2) computing said candidate steady state *ρ̂ₖ* = Σ*ₙ cₙ ρ̂ₛₛ*^{(*n*)} for the parameter set *pₖ* by determining the set of coefficients {*cₙ*}*ₙ* minimizing the equation $\left‖{{L}_{0}}^{˜}{\hat{ρ}}_{k}+\right.$$\left.{Δρ}_{k}{L}_{1}{\hat{ρ}}_{k}-B\right‖$, where *B =* [*b*;0;...;0],

d) based on the value of $\left‖L\left({ρ}_{0}+{Δρ}_{k}\right){\hat{ρ}}_{k}-B\right‖$, returning *ρ̂ₖ* as the steady state for the parameter set *pₖ*, or else storing parameter set *pₖ* as a parameter set to be computed with another initial set of parameters.

## Description

The invention concerns a computer-implemented method for calculating a plurality of steady states of an open quantum system.

The theory of open quantum systems describes the interaction between quantum systems and their environments, capturing phenomena distinct from those of isolated quantum systems. Under a Markovian approximation, they can be described with the Lindblad master equation, which incorporates the effects of the environment through jump operators. When studying the Lindblad master equation, the long-time dynamics, where a steady state emerges, are of particular interest.

Being able to both measure a steady state experimentally and simulate it efficiently enables the calibration of a model describing the open quantum system, by adjusting the parameters of the model until the simulation matches experimental data.

A typical experiment setup for calibration involves measuring a wide range of steady states (typically by adjusting various experimental knobs) and comparing them with results from simulation. Experimentally, it is often easier to prepare the steady state than the ground state or other transient dynamics. However, the need remains to compute these steady states efficiently.

While analytical solutions exist for specific models, most steady states must be computed numerically.

In the article by Li et al. "Perturbative approach to Markovian open quantum systems", arXiv:1311.3227 [quant-ph], https://doi.org/10.1038/srep04887, a perturbation theory for non-degenerate Markovian open quantum systems is proposed. This theory expresses the right eigenvectors of a generic time-independent Liouvillian 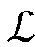 (*ε*) *=* 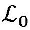 *+ ε* 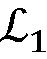 as *ρ*(*ε*) = ∑*ⱼ ε^{j} ρ̂*^{(*j*)}, where 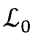 represents the unperturbed Liouvillian and 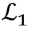 is the action of a perturbation of intensity *ε*. The Liouvillian operator is also referred to as "Lindbladian" and both terms interchangeably in the following. Each contribution is computed though the recurrence relation L₀*ρ*^{*n*+1} *= -L*₁*ρⁿ.* The closed form solutions of this equation are obtained using the Moore-Penrose pseudo-inverse of the unperturbed Linbladian. At finite perturbation order, the resulting perturbed density matrices may violate positivity. To resolve this issue, another perturbation method based on the Cholesky decomposition is introduced which enforces positivity by construction.

This approach, while interesting, is extremely costly from a computing perspective. Indeed, computing the Moore-Penrose pseudo-inverse of the unperturbed Linbladian must typically be done numerically and is prohibitively expensive due to the exponential scaling of the Liouvillian matrix with system size. Additionally, in most physically relevant cases, 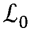 is a sparse superoperator and therefore its pseudo-inverse will typically be a dense superoperator with large memory requirements. These limitations restrict this method to small system sizes.

In the article by Nagib et al. "Exact steady state of perturbed open quantum systems", arXiv:2501.06134 [quant-ph], https://doi.org/10.48550/arXiv.2501.06134, a method to compute steady states of parameterized Liouvillians 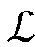 (*ε*) = 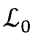 *+ ε* 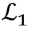 is disclosed. After computing the exact steady state at a single point in parameter space, it constructs and diagonalizes the matrix ${L}_{0}^{- 1} {L}_{1}$. With the resulting matrix in hand, the propagator of the system can then be constructed, which yields the exact steady state at arbitrary perturbation strengths.

Similarly to the article by Li et al., constructing the operator ${L}_{0}^{- 1} {L}_{1}$ requires an expensive inversion of 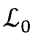 . Furthermore, full diagonalization of the (potentially dense) ${L}_{0}^{- 1} {L}_{1}$ matrix is an expensive operation which also restricts this method to small system sizes.

The invention aims at improving the situation. To this end, the Applicant proposes a computer-implemented method for calculating a plurality of steady states of an open quantum system, wherein said open quantum system is a physical quantum system being governed by a Lindblad master equation of the type $\frac{d}{dt} \hat{ρ} \left(t\right) = L \hat{ρ} \left(t\right) = \frac{- i}{ℏ} \left[H, \hat{ρ}\right] +$ ${\sum }_{υ} \left({L}_{υ}\hat{ρ}{L}_{υ}^{†}-\frac{1}{2}\left({L}_{υ}^{†}{L}_{υ}\hat{ρ}+\hat{ρ}{L}_{υ}^{†}{L}_{υ}\right)\right)$ where ℏ is the reduced Planck constant, *i* is the imaginary unit, with *i*² = -1, *H* is the Hamiltonian of the open quantum system, with [*H, ρ̂*] *= Hρ̂ - ρ̂H, L_{υ}* is the *υ*-th Lindblad operator - or jump operator, ${L}_{υ}^{†}$ is the conjugate transpose of the *υ*-th Lindblad operator, and 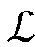 is the Liouvillian superoperator which generates the Liouvillian dynamics, said Lindblad master equation being parametrized by a set of parameters *p* which characterize the physical quantum system and comprise fixed parameters and variable parameters, said method comprising the following operations:
a) based on an initial set of parameters *p*₀, reformulating said Linblad master equation in the form 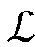 (*p*) *=* 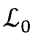 *+* Δ*ₚ* 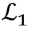 where p *= p*₀ *+ Δp,* 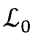 *=* 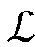 (*p*₀)*,* and 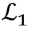 is a Liouvillian,
b) summing the trace superoperator *T* with a chosen complex coefficient *b* to 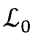 *,* to obtain ${{L}_{0}}^{˜}$, and performing a LU decomposition or an incomplete LU decomposition of ${{L}_{0}}^{˜}$, after operation b), for each of a plurality of parameters sets {*pₖ*}*ₖ* such that *pₖ = p*₀ *+ Δₖ,*
c) computing a candidate steady state *ρ̂ₖ* by
c1) determining a steady state basis {*ρ̂ₛₛ*^{(*n*)}}ₙ, where *n* is an integer smaller than a chosen maximum number *N*₀ of basis members, in which the first member is derived from *b* or *Δₖ*, and all basis members respect the condition ${{L}_{0}}^{˜} {{\hat{ρ}}_{ss}}^{\left(n\right)} = {L}_{1} {{\hat{ρ}}_{ss}}^{\left(n-1\right)}$ or ${{L}_{0}}^{˜} {{\hat{ρ}}_{ss}}^{\left(n\right)} =$ $\left({{L}_{0}}^{˜}+{Δ}_{k}{L}_{1}\right) {{\hat{ρ}}_{ss}}^{\left(n-1\right)}$ for n>0, using the LU decomposition from operation b),
c2) computing said candidate steady state *ρ̂ₖ* = ∑ₙ *cₙ ρ̂ₛₛ*^{(*n*)} for the parameter set *pₖ* by determining the set of coefficients {*cₙ*}*ₙ* minimizing the equation $\left‖{{L}_{0}}^{˜}{\hat{ρ}}_{k}+{Δp}_{k}{L}_{1}{\hat{ρ}}_{k}-B\right‖$, where *B* = [b; 0; ... ; 0],
d) based on the value of ∥ 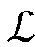 (*p*₀ *+ Δpₖ*)*ρ̂ₖ - B*∥, returning *ρ̂ₖ* as the steady state for the parameter set *pₖ*, or else storing parameter set *pₖ* as a parameter set to be computed with another initial set of parameters.

This method is advantageous because it allows computing in an extremely fast and accurate manner a great quantity of steady states for an open quantum system, based on a single known steady state. This allows to immensely increase the speed of such computing. In one example, for determining the steady state over a whole parameter region (e.g. a 50 × 50 grid of points), the method allowed to go from an average of 7 hours of computing time with a standard computer and a conventional method to about 10 minutes with the method.

In various embodiments, the method may present one or more of the following features:
- operation c1) comprises computing all steady state basis members until *N*₀ - 1, and operation d) comprises returning *ρ̂ₖ* as the steady state for the parameter set *pₖ* if the value of ∥(*p*₀ *+ Δpₖ*)*ρ̂ₖ - B*∥ is lower than a chosen threshold ;
- operation c1) comprises determining at least one steady state basis member *ρ̂ₛₛ*^{(*n*)}*,* and operations c1) and c2) are repeated with an increased value of n by the number of steady state basis members determined in operation c1), until the value of ∥ 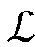 (*p*₀ *+ Δpₖ*)*ρ̂ₖ - B*∥ is lower than a chosen threshold and return *ρ̂ₖ* as the steady state for the parameter set *pₖ* in operation d), or until *n* =*N*₀ and store parameter set *pₖ* as a parameter set to be computed with another initial set of parameters in operation d) ;
- the method further comprises: e) after all of the plurality of parameters sets {*pₖ*}*ₖ* associated with a given initial set of parameters have been treated, if there remains set of parameters to be computed with another initial set of parameters: e1) determine another initial set of parameters, e2) repeat operations a) to d) with the initial set of parameters of operation e1) ;
- in operation e2), repeating operation c2) comprises using the steady state basis members associated with the initial set of parameters of operation e1), as well as at least one of all the other steady state basis members associated with another initial set of parameters ;
- the set of parameters comprise characterization parameters which are the same for all sets of parameters, and control parameters which are variable, the method further comprising:
   f) controlling a physical quantum system with the control parameters of a set of parameters for which a steady state has been determined, and measuring a physical quantity on said physical quantum system,
   g) comparing the measured physical quantity of operation f) with a value derived from the steady state associated with the set of parameters of operation f),
   h) based on the result of operation g), modifying said characterization parameters and repeating operations f) and g) until the comparison of operation g) is lower than a threshold value ; and
- the set of parameters comprise characterization parameters which are the same for all set of parameters, and control parameters which are variable, the method further comprising:
   i) controlling a physical quantum system with the control parameters of a set of parameters for which a steady state has been determined, and measuring a physical quantity on said physical quantum system,
   j) comparing the measured physical quantity of operation f) with a value derived from the steady state associated with the set of parameters of operation f), k) based on the result of operation j), modifying said control parameters and repeating operations i) and j) until the comparison of operation j) is lower than a threshold value.

The invention also concerns a device comprising an open quantum system, wherein said open quantum system is a physical quantum system being governed by a Lindblad master equation of the type $\frac{d}{dt} \hat{ρ} \left(t\right) = L \hat{ρ} \left(t\right) = \frac{- i}{ℏ} \left[H, \hat{ρ}\right] + {\sum }_{υ} \left({L}_{υ}{ρL}_{υ}^{†}-\frac{1}{2}\left({L}_{υ}^{†}{L}_{υ}\hat{ρ}+\hat{ρ}{L}_{υ}^{†}{L}_{υ}\right)\right)$ where ℏ is the reduced Planck constant, *i* is the imaginary unit, with *i*² = -1, *H* is the Hamiltonian of the open quantum system, with [H, *ρ*] *= Hρ - ρH, L_{υ}* is the *υ*-th Lindblad operator - or jump operator, ${L}_{υ}^{†}$ is the conjugate transpose of the *υ*-th Lindblad operator, and 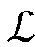 is the Liouvillian superoperator which generates the Liouvillian dynamics, said Lindblad master equation being parametrized by a set of parameters *p* which characterize the physical quantum system and comprise fixed parameters and variable parameters, said device further comprising a command circuit configured to send one or more control signals to control the quantum system, wherein the device is further configured to perform the method described above. In this device, said open quantum system may comprise one or more cat qubit.

The invention also concerns a computer program product comprising instructions which, when executed by processing circuitry, causes the device to carry out the method described above, and a computer-readable medium having stored thereon this computer program product.

Other features and advantages of the invention will readily appear in the following description of the drawings, which show exemplary embodiments of the invention and on which:
- Figure 1 shows a diagram of a computer system which interacts with a physical quantum system to perform a method according to a first aspect,
- Figure 2 shows a generic diagram of an exemplary embodiment of the method according to a first aspect,
- Figure 3 shows an embodiment of a cat qubit device, control qubit device and linear coupling between the control qubit device and the cat qubit device,
- Figure 4 shows an exemplary embodiment of an operation of figure 2,
- Figure 5 shows an alternative exemplary embodiment of the operation of figure 4,
- Figure 6 shows iterative results an expected physical quantity during the characterization of a physical quantum system similar to that of figure 3 using the method of figure 2, and
- Figure 7 shows iterative values of parameters fitted during the fitting shown on figure 6.

The drawings and the following description are comprised for the most part of positive and well-defined features. As a result, they are not only useful in understanding the invention, but they can also be used to contribute to its definition, should the need arise.

The description may make reference or use elements protected or protectable by copyright. The Applicant does not object to the reproduction of those elements in as much as it is limited to the necessary legal publications, however this should not be construed as a waiver of rights or any form of license.

### A. Open quantum systems

Since a perfect isolation of quantum systems is impossible, the theory of open quantum system is an indispensable tool in practice to treat any quantum system.

The state of a closed quantum system is described by a wave function - generally expressed as ψ - and its dynamics are governed by the Schrödinger equation. The resulting unitary evolution can manifest physical phenomena such as entanglement and superposition. However, this formalism does not accurately describe open quantum systems coupled to a dissipative environment.

To overcome these drawbacks, an alternative solution consists in describing the state of an open quantum system by a density operator - also called density matrix - generally noted *ρ̂.* The approach using the density operator *ρ̂* allows to access the relevant information of the open quantum system and to represent both pure and mixed states.

Under appropriate assumptions - for instance the Born-Oppenheimer and Markov approximations - that are typically valid in the systems considered below, the time evolution of the density operator of an open quantum system can be expressed as a Lindblad master equation (also known as GKSL equation for "*Gorini-Kossakowski-Sudarshan-Lindblad equation*"). The Lindblad master equation conserves the interpretation of the density matrix as a valid quantum state since it preserves the trace and complete positivity of the density matrix. Such an equation can be written in the following form - or diagonal form: $\frac{d}{dt} \hat{ρ} = - i \left[H, \hat{ρ}\right] + {\sum }_{υ} \left({L}_{υ}\hat{ρ}{L}_{υ}^{†}-\frac{1}{2}\left({L}_{υ}^{†}{L}_{υ}\hat{ρ}+\hat{ρ}{L}_{υ}^{†}{L}_{υ}\right)\right)$, where:
- i is the imaginary unit, with *i*² = -1,
- H is the Hamiltonian of the open quantum system, with *[H, ρ̂*] *= Hρ̂ - pH,*
- *L_{υ}* is the *υ*-th Lindblad operator - or jump operator, and
- ${L}_{υ}^{†}$ is the conjugate transpose of the u-th Lindblad operator.

The right-hand side of the Lindblad master equation can first be seen as a sum of a Hamiltonian part, which models the unitary part of the dynamics, corresponding to a closed evolution, and a dissipative part, which corresponds to the finite sum expressed with the Lindblad operators and models the interaction of the quantum system with its environment.

It is often the case that the dynamics of the system can be divided into into a sum of two Lindbladians: 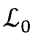 , which generates the unperturbed dynamics (which may even be treated analytically), and 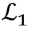 , which represents a small perturbation and generates small corrections to the unperturbed system. The Lindblad master equation can then be written as follows: $\frac{d}{dt} \hat{ρ} = {L}_{0} \left(\hat{ρ}\right) + {L}_{1} \left(\hat{ρ}\right)$*,* where: 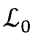 is the unperturbed dynamics of the density operator *ρ̂* and 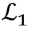 is the perturbation.

The perturbation can be identified within the Lindblad master equation by the fact that it is negligible compared to the unperturbed dynamics.

The term "negligible" should be understood here as meaning that an amplitude of the perturbation is significantly smaller than an amplitude of the unperturbed dynamics. Typically, and for the sake of providing a reasonable order of magnitude, one can generally consider that the perturbation is negligible compared to the unperturbed dynamics when the amplitude of the perturbation is five times smaller than the amplitude of the unperturbed dynamics: 5 * ∥ 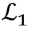 ∥ < ∥ 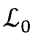 ∥, where: ∥·∥ is a norm.

Moreover, to further illustrate this order of magnitude difference between the unperturbed dynamics and the perturbation, it is known in the literature to re-formulate the Lindblad master equation with a parameter ε quantifying this difference: $\frac{d}{dt} \hat{ρ} = {L}_{0} \left(\hat{ρ}\right) + {εL}_{1} \left(\hat{ρ}\right)$, with: 0 ≤ *ε* ≪ 1.

Typically, to give an order of magnitude as indication, one generally has: 0 ≤ *ε* ≤ 0.2. In such a case, the unperturbed dynamics and the perturbation *per* se have respective amplitudes of the order of magnitude.

The unperturbed dynamics is embedded in both the Hamiltonian part and the dissipative part, as well as the perturbations. In other words: ${L}_{0} \left(\hat{ρ}\right) = - i \left[{H}_{0}, \hat{ρ}\right] + {\sum }_{{υ}_{0}} \left({L}_{{υ}_{0}}\hat{ρ}{L}_{{υ}_{0}}^{†}-\frac{1}{2}\left({L}_{{υ}_{0}}^{†}{L}_{{υ}_{0}}\hat{ρ}+\hat{ρ}{L}_{{υ}_{0}}^{†}{L}_{{υ}_{0}}\right)\right)$ ${L}_{1} \left(\hat{ρ}\right) = - i \left[{H}_{1}, \hat{ρ}\right] + {\sum }_{{υ}_{1}} \left({L}_{{υ}_{1}}\hat{ρ}{L}_{{υ}_{1}}^{†}-\frac{1}{2}\left({L}_{{υ}_{1}}^{†}{L}_{{υ}_{1}}\hat{ρ}+\hat{ρ}{L}_{{υ}_{1}}^{†}{L}_{{υ}_{1}}\right)\right)$ where: H₀ and H₁ are respectively the unperturbed and the perturbative Hamiltonians, with *H = H*₀ *+ H*₁ , and *L*_{*υ*₀} and *L*_{*υ*₁} are the respective Lindblad operators of the unperturbed dynamics and the perturbations.

### B. Cat-qubits

As an example, the particular case of a cat-qubit, a qubit able to correct at least a part of its errors autonomously without requiring redundancy, is considered hereinafter. The possibility of realizing such a qubit has been demonstrated by R. Lescanne et al. in "Exponential suppression of bit-flips in a qubit encoded in an oscillator" (Nature Physics, 2020), https://doi.org/10.1038/s41567-020-0824-x. In particular, the dissipative cat-qubit relies on a mechanism that dissipates photons in pairs. This process pins down two computational states to separate locations in phase space. By increasing this separation, an exponential decrease of the bit-flip rate while only linearly increasing the phase-flip rate can be measured.

A cat-qubit is defined as a specifically selected two-dimensional sub-manifold of a main manifold spanned by several coherent states. As an example, the two-component cat-qubit sub-manifold is the span of two coherent states with equal amplitude and opposite phase; the steady-state or ground-state manifold being two-dimensional, in that case the sub-manifold is equal to the main manifold. To generalize, the 2N-component cat-qubit main manifold is the span of 2N coherent states with equal amplitudes and phase shifted by *π*/*N* from one another.

The unperturbed dynamics of the dissipative cat-qubit can be expressed as follows: ${L}_{0} \left(\hat{ρ}\right) = - i \left[{H}_{0}, \hat{ρ}\right] + L \hat{ρ} {L}^{†} - \frac{1}{2} \left({L}^{†}L\hat{ρ}+\hat{ρ}{L}^{†}L\right)$ with: $L = \sqrt{{κ}_{2}} \left({a}^{2}-{α}^{2}\right)$ with *α >* 0 and *H*₀ = 0 or, equivalently: $L = \sqrt{{κ}_{2}} {a}^{2}$ and *H*₀ *= ε*₂*ₚₕa*² + *ε*_{2*ph*}**a*^{†²} where, in the last case: α is a complex number fixed by the ratio of *ε*_{2*ph*} the amplitude of the drive to the two-photon dissipation rate: $α = \sqrt{2 {ϵ}_{2 ph} / {κ}_{2}}$, and *κ*₂ is the two-photon dissipation rate, a is the photon annihilation operator and *α* is a complex number defining the cat qubit.

It is known to the skilled person that the dissipative stabilization of two coherent states requires to engineer a non-linear conversion between two photons of a first mode a - also called the cat-qubit mode - that hosts the stabilized quantum manifold, and one photon of a second lossy mode b known as buffer mode, and conversely. Such a stabilization scheme allows to suppress bit-flips exponentially with the number of photons in said two coherent states.

The jump operator L can be realized by coupling the buffer mode b to the cat-qubit and by engineering the interaction *a*²*b*^{†} *+ a*^{†²}*b,* where b is the photon annihilation operator of mode b with a pump at frequency 2*ωₐ* - *ω_{b}* and a drive on the buffer mode at frequency *ω_{b}.*

In cat-qubit architectures, the quality of the hardware is measured by the ratio of two time scales: time 1/*κ*₂, where *κ*₂ is the two-photon dissipation rate that stabilizes the qubit; and time 1/*κ*₁, where *κ*₁ is the one-photon loss rate. There are other sources of errors such as dephasing at a rate *κ*_{Φ}, thermal excitations, self-Kerr and cross-Kerr interactions, or other undesirable couplings with other quantum systems present in the vicinity of the memory, etc.

Nevertheless, one-photon loss is the dominant error mechanism and for the sake of clarity, only this physical error mechanism is considered in what follows. In general, all that follows is valid by replacing the ratio *κ*₁/*κ*₂ by the sum of the rates of the error mechanisms divided by *κ*₂.

### C. First aspect

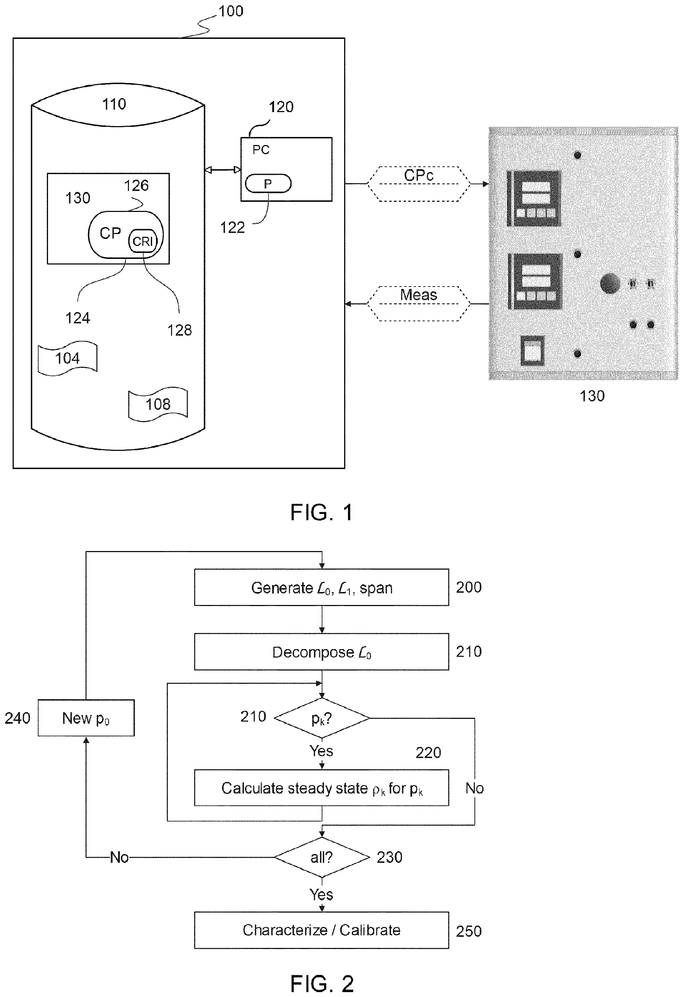

Figure 1 shows a general diagram on an embodiment of the computer device according to the invention.

The computer device shown on figure 1 as a block diagram of a device 100 (e.g., a network node, connected device, and the like), according to an embodiment. As shown in figure 1, device 100 may comprise: processing circuitry (PC) 102, which may include one or more processors (P) 104; a network interface 106 comprising a transmitter (Tx) 108 and a receiver (Rx) 110 for enabling the device to transmit data to and receive data from other computing devices connected to a network 112 (e.g., an Internet Protocol (IP) network) to which network interface 106 is connected; and a local storage unit (a.k.a., "data storage") 114, which may include one or more non-volatile storage devices and/or one or more volatile storage devices.

In embodiments where PC 102 includes a programmable processor, a computer program product (CPP) 116 may be provided. CPP 116 includes a computer readable medium (CRM) 118 storing a computer program (CP) 120 comprising computer readable instructions (CRI) 122. CRM 118 may be a non-transitory computer readable medium, such as, magnetic media (e.g., a hard disk), optical media, memory devices (e.g., random access memory, flash memory), and the like.

Processors 104 include any means known for performing automated calculus, such as CPUs, GPUs, CPUs and/or GPUs grids, remote calculus grids, specifically configured FPGAs, specifically configured ASICs, specialized chips such as SOCs or NOCs, Al specialized chips, etc.

In an embodiment, data storage 114 stores one or more open quantum system models, as well as open quantum system physical quantity measurements. An open quantum system model generally comprises a Linbladian formula as disclosed above which comprises system parameters which are fixed and physically characterize the open quantum system, and control parameters which are variable.

One of the advantages achieved by the invention is to allow to determine a precise characterization of a physical quantum system with a limited amount of measurements. This is obtained by performing measurements on the physical quantum system, and by using these measurements to progressively refine the system parameters which fit the measurements in view of the Linbladian formula and the control parameters used to obtain these measurements.

More precisely, as will appear below, the invention does not yield improvement in the computation of steady states one by one. However, based on a single known steady state, it allows to compute multiple, related steady states of the open quantum system. Intuitively, steady states emerging from similar experimental setups will be similar. This means that once one steady state has been computed, this extra knowledge can be used to compute more efficiently other steady states for neighboring sets of parameters. The computed steady states can then be confronted with physical measurements on the open quantum system in order to refine the fixed parameters of the open quantum system model, or to fine tune the control parameters in order to achieve specific states.

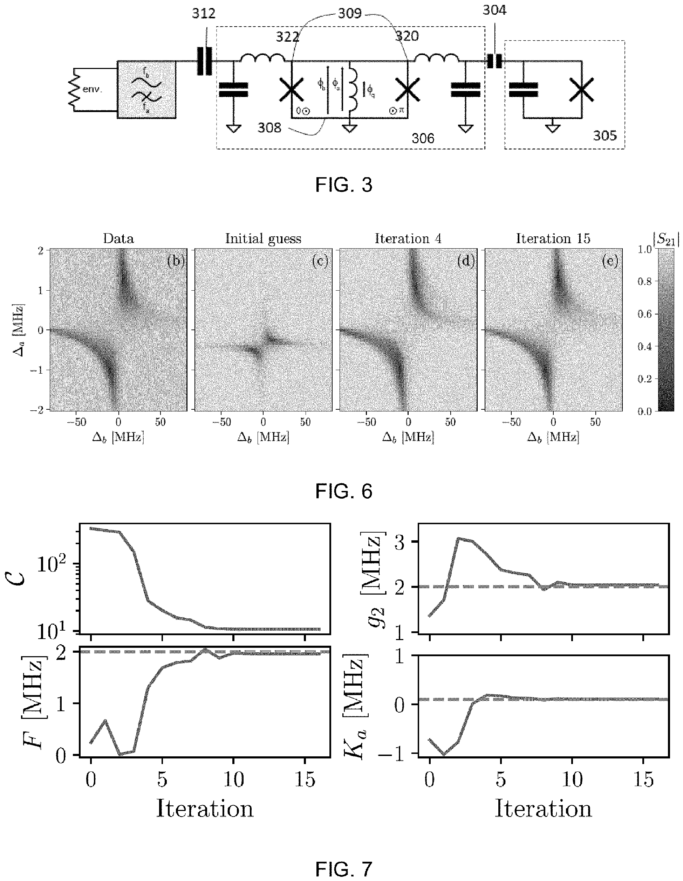

On figure 1, the reference 130 designates the open quantum system, which is controlled by a set of control parameters CPc which are sent by the device 100. In return, the device 100 receives a measurement Meas which is a physical quantity measured on the open quantum system. As shown in the examples below, this physical quantity can vary depending on the open quantum system, and on the application which is sought. In one example described with figures 3 and 6, the quantum system may be a superconducting quantum circuit which comprises two linear modes coupled through an ATS and which is arranged to host a cat qubit. In this case, the control parameters may be the frequencies of the differential flux pump on the ATS and the frequency of the buffer drive, whereas the physical quantity which is measured may be the amplitude and phase of reflected signal of the buffer mode when subject to a microwave tone of varying frequency. In this example, the device 100 may be used to fine tune the fixed parameters of the open quantum system model and precisely characterize it.

In the example described herein, the data storage 114 may be realized in any way suitable, that is by means of a hard disk drive, a solid-state drive, a flash memory, a disk (CD or DVD), a memory embedded in a processor, a distant storage accessible in the cloud, etc.

Data storage 114 may also store any transitory data which may be generated in the course of executing the invention, as well as maps resulting from the operation of the device 100, possibly combined with experimenter made annotations. For example, this transitory data may include all of the LU decompositions, whether complete or incomplete, all of the steady state basis ${\left\{{\hat{ρ}}_{ss}^{\left(n\right)}\right\}}_{n}$ which are computed, all of the proximity scores for determining the steady state candidates *ρ̂*ₖ and the corresponding steady state candidates, etc.

### D. Variational Perturbation Theory

Figure 2 shows an exemplary embodiment of a method according to a first aspect.

In a first operation 200, the device 100 receives the first steady state set of variable parameters and fixed parameters. These parameters define together an initial set of parameters *p*₀, which will be the starting point for computing steady states for a multiplicity sets of parameters, by using the formula $\frac{d}{dt} \hat{ρ} = {L}_{0} \left(\hat{ρ}\right) + {εL}_{1} \left(\hat{ρ}\right)$*.*

Operation 200 comprises computing the steady state 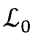 (*ρ̂*) for *p*₀, and defining the formula for 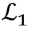 (*ρ̂*) based on the Lindblad master equation. The computation of 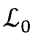 (*ρ̂*) for *p*₀, which will hereinafter be noted 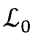 , can be performed in a number of ways as already known in the art.

At the same time, this operation 200 also entails receiving span values, that is values indicating the ranges of values for the variable parameters of the initial set of parameters *p*₀.

Here, the notion of variable parameters and fixed parameters is not used in reference to the computation of steady states. They are not to be confused with the fact that these parameters can vary or not in the physical quantum system for which the steady states are sought. In other words, parameters of the physical open quantum system which may vary (such a drive frequency, or flux line voltage) may be fixed parameters in the initial set of parameters *p*₀, and, conversely, parameters of the physical open quantum system which do not vary (such as photon loss rate for a buffer or a memory, or quantum gain) may be variable parameters in the initial set of parameters *p*₀. Or they can also have corresponding nature. What matters is that the device 100 allows to fix some of the parameters of the Linblad equation and to vary some other parameters in order to calculate steady states associates with the varying values of the variable parameters. This will be made apparent with the example of the cat-qubit system of figure 3.

In the examples described here, the device 100 applies a technique which the Applicant has named "*variational perturbation theory*" (or "*VPT*"). This technique builds on that used in the article by Li et al. and Nagib et al. to compute the steady states in multiple points (each point representing a set of parameters different from the initial set of parameters).

As explained above, perturbation theory, while useful, is rendered almost useless because of the computational intensity required by the inverse-type operations of their respective 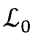 .

The Applicant has discovered that, by using an LU decomposition and by using a variational approach of the perturbation theory, it becomes applicable to much bigger open quantum systems.

More precisely, this variational approach relies on defining the steady state as a sum *ρ̂ₛₛ*(*ε*) *=* ∑*ⱼ cⱼ* (*ε*)*ρ̂*^{(*j*)},with *cⱼ* being coefficients which are made to vary, and *ρ̂*^{(*j*)} being a perturbative correction, while conventional perturbation theory fixed the much more restrictive ansatz *ρ̂ₛₛ*(*ε*) = ∑*ⱼ ε^{j} ρ̂*^{(*j*)}.

The LU decomposition is rendered possible by using the modified Liouvillian superoperator ${{L}_{0}}^{˜} = {L}_{0} + bT$ where *T* is the trace superoperator and b is an arbitrary complex coefficient. Conventionally, b is set to 1, but it could be set otherwise. The LU decomposition is particularly useful, because it can be reused to compute solutions of the recursion relations ${{L}_{0}}^{˜} {\hat{ρ}}^{n + 1} = - {L}_{1} {\hat{ρ}}^{n}$ by removing the null-space component of 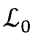 (i.e. ${\hat{ρ}}_{ss}^{\left(0\right)}$). It should be noted that the computation of the LU is not as numerically heavy as computing the pseudo inverse, and thus computing increasing perturbation orders having the LU becomes an inexpensive numerical procedure.

This altogether allows to use the variational approach described in the paragraph above with *ρ̂ₛₛ*(*ε*) *=* ∑*ⱼ ε^{j} ρ̂*^{(*j*)}*.*

The use of the variational approach, based on the construction of an effective basis to represent the problem, can be further generalized to avoid problems such as divergencies present in open quantum systems known as bistabilities or phase transitions.

In these peculiar points, the system's steady state can change abruptly by minimally changing one of the system's parameters. Thus, any perturbation theory, either the standard one or the variational one, will fail in capturing this behavior. In other words, in the presence of bistability, much of the computational time is spent to describe this jump. However, one can generalize the ansatz by taking two points, *ε*₁ on the right and *ε*₂ on the left of the critical point where the jump occurs, and write *ρ̂ₛₛ*(*ε*) = ∑*ⱼ cⱼ*(*ε*₁) *ρ̂*^{(*j*)}(*ε*₁) *+* ∑*ₖ cₖ*(*ε*₂)*ρ̂*^{(*k*)}(*ε*₂).

Namely, this allows for perturbation on both sides of the critical point and permits an efficient description of both regimes on the right and left of the jump and of the critical regime where it occurs.

Furthermore, it can easily be generalized where there are independent variable parameters, as the problem can be rewritten 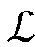 (*ρ̂*) *=* 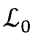 + *Δ*₁ 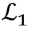 + *Δ*₂ 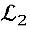 where *Δ*₁ and *Δ*₂ represent the independent variable parameters and 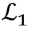 and 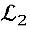 represent the perturbation Liouvillians.

The decomposition of 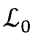 is performed in operation 210. In this operation, 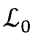 is first transformed using the modified Liouvillian superoperator ${{L}_{0}}^{˜} = {L}_{0} + bT$ where *T* is the trace superoperator and b is an arbitrary complex coefficient such that *bT*(*ρ̂*) *=* [*b Tr*(*ρ*); *0*; *...*; 0].

Thereafter, device 100 computes a complete or incomplete LU decomposition of ${{L}_{0}}^{˜}$. This complete or incomplete LU decomposition of ${{L}_{0}}^{˜}$ can be performed by any means known, such as the book by lain Duff et al. "Direct methods for sparse matrices", 1986, Oxford University Press, Inc., ISBN 978-0-19-853408-2 for complete LU decomposition, or the book by Yousef Saad "Iterative methods for sparse linear systems", 2003, Society for Industrial and Applied Mathematics, ISBN 978-0-89871-534-7 for incomplete LU decomposition.

Once operation 210 is finished, the device 100 proceeds by starting a loop in which all of the ranges defined by the span in operation 200 are used to compute a corresponding steady state. Here, this loop is presented as iterative. However, it will be obvious to the person skilled in the art that some of the operations may be parallelized. As a result, while the example shown is iterative, the possible parallelization is to be construed as within the scope of the invention.

The loop starts with an operation 210 in which a current set of parameters *pₖ* is derived from the span of the set of parameters. Thereafter, the steady state *ρ̂ₖ* for the current set of parameters *pₖ* is calculated in an operation 220.

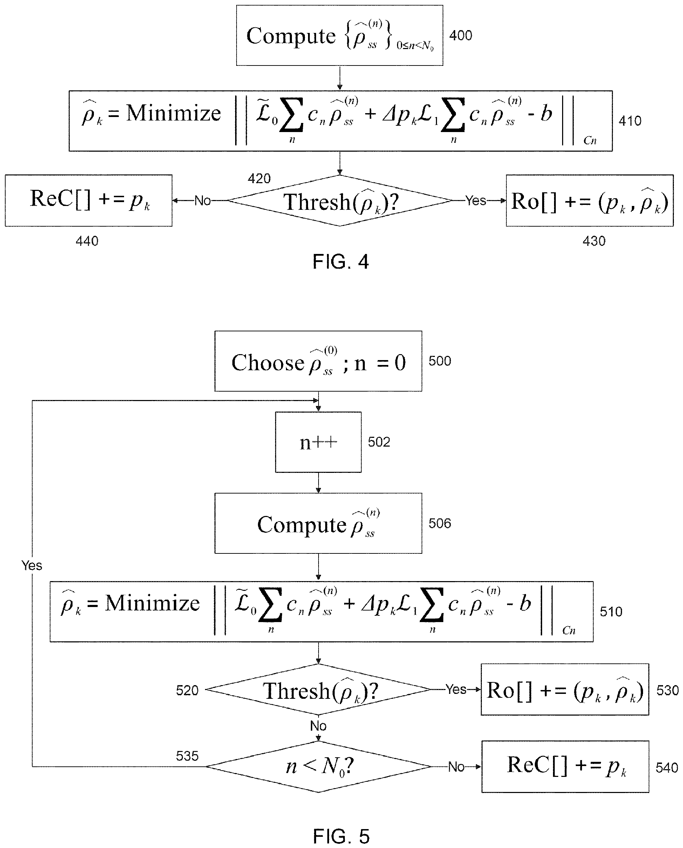

Figure 4 and figure 5 show two alternative manners in which the Applicant has applied the variational perturbation theory to perform operation 220.

The alternative of figure 4 will hereinafter be named "direct VPT", whereas the alternative of figure 5 will hereinafter be named "iterative VPT". Both alternatives are based on building a steady state basis ${\left\{{\hat{ρ}}_{ss}^{\left(n\right)}\right\}}_{n}$ in a recursive manner discussed above. In both alternatives, the number of members of the steady state basis is a chosen fixed integer number *N*₀ which of course may vary depending on the application. The main difference between these two alternatives is that, in the direct VPT, the full steady state basis ${\left\{{\hat{ρ}}_{ss}^{\left(n\right)}\right\}}_{n}$ is computed prior to determining the set of variational coefficients {*cⱼ*}ⱼ to determine the candidate steady state state *ρ̂ₖ* for the current set of parameters *pₖ*. On the contrary, the iterative VPT builds the steady state basis ${\left\{{\hat{ρ}}_{ss}^{\left(n\right)}\right\}}_{n}$ of perturbative elements iteratively and, at each step, checks whether the obtained candidate steady state is good enough.

### E. Direct VPT

As shown on figure 4, direct VPT starts in an operation 400 with the computation of the full steady state basis ${\left\{{\hat{ρ}}_{ss}^{\left(n\right)}\right\}}_{n}$ comprising *N*₀ members. This is done by choosing a first steady state member *ρ̂ₛₛ*⁽⁰⁾, and by calculating the *ρ̂ₛₛ*^{(*n*)} members with the recursive formula ${{L}_{0}}^{˜} {\hat{ρ}}_{ss}^{\left(n\right)} = {{L}_{1}}^{˜} {\hat{ρ}}_{ss}^{\left(n-1\right)}$ or ${{L}_{0}}^{˜} {\hat{ρ}}_{ss}^{\left(n\right)} = \left({{L}_{0}}^{˜}+{Δ}_{k}{L}_{1}\right) {\hat{ρ}}_{ss}^{\left(n-1\right)}$*.* Conventionally, *ρ̂*ₛₛ⁽⁰⁾ may be chosen equal to b, as the first recursion will be equivalent to solving ${{L}_{0}}^{˜} {{\hat{ρ}}_{ss}}^{\left(1\right)} = B$*,* where *B =* [b; 0; ... ; 0].

The reason for these two formulas is that the Applicant has found that, using a complete LU decomposition, they are strictly equivalent to one another, and that, using an incomplete LU, they are also equivalent and only need different numbers of basis members to achieve similar performance, because $Span \left({\left[{{{L}_{0}}^{˜}}^{- 1}\left({{L}_{0}}^{˜}+{εL}_{1}\right)\right]}^{k}{\hat{ρ}}_{0}\right) =$ $Span \left({\left[\left(I+ε{{{L}_{0}}^{˜}}^{- 1}{L}_{1}\right)\right]}^{k}{\hat{ρ}}_{0}\right) = Span \left({\left[\left({{{L}_{0}}^{˜}}^{- 1}{L}_{1}\right)\right]}^{k}{\hat{ρ}}_{0}\right)$*.*

It should be noted that, for a given set of parameters *pₖ*, the same formula will have to be used for all members of the steady state basis.

Once operation 400 is over, the candidate steady state *ρ̂ₖ* for the current set of parameters *pₖ* can be computed in an operation 410 by choosing the set of coefficients {*cⱼ*}*ⱼ* which minimize the value of $\left‖{{L}_{0}}^{˜}{\sum }_{n} {c}_{n} {{\hat{ρ}}_{ss}}^{\left(n\right)}+{Δp}_{k}{L}_{1}{\sum }_{n} {c}_{n} {{\hat{ρ}}_{ss}}^{\left(n\right)}-B\right‖$ where *pₖ* = *p*₀ + *Δpₖ.*

This is a conventional optimization problem which can be performed using least squares optimisation, or another optimization method.

A check is then performed in an operation 420, in which a function Thresh() determines whether the candidate steady state *ρ̂ₖ* of operation 410 is a good enough approximation of the steady state for the set of parameters *pₖ*. This is performed by determining if the value ∥(*p*₀ *+ Δpₖ*)*ρ̂ₖ - B*∥ is bellow a chosen threshold.

If that is the case, then *ρ̂ₖ* and its corresponding set of parameters *pₖ* are stored in a table Ro[] in an operation 430. It that is not the case, then it means that the set of parameters *pₖ* is not within the radius of convergence of the VPT for the initial point *p*₀ and that the steady state for the set of parameters *pₖ* will have to be determined using another initial point. Consequently, the set of parameters *pₖ* is stored in a table ReC[] which stores all points which need recalculation of the steady state in an operation 440.

In practice, the value tested in operation 420 is readily available at the end of operation 410. Hence, operation 420 could be included as a last step of operation 410.

### F. Iterative VPT

As shown on figure 5, iterative VPT starts with an operation 500 in which the first member *ρ̂ₛₛ*⁽⁰⁾ of the steady state basis {*ρ̂ₛₛ*^{(*n*)}}*ₙ* is chosen. This can be done by setting *ρ̂ₛₛ*⁽⁰⁾ *= Δpₖ,* or by using the nearest computed steady state solution. Alternatively, it can also be set to b. Simultaneously, an iteration index n is set to 0.

The candidate steady state for the set of parameters *pₖ* is thereafter determined by running a loop in which the iteration index is first increased in an operation 502, and the corresponding steady state basis member *ρ̂ₛₛ*^{(*n*)} is computed in an operation 506 using one of the two recursive formulas ${{L}_{0}}^{˜} {{\hat{ρ}}_{ss}}^{\left(n\right)} = {L}_{1} {{\hat{ρ}}_{ss}}^{\left(n-1\right)}$ or ${{L}_{0}}^{˜} {{\hat{ρ}}_{ss}}^{\left(n\right)} = \left({{L}_{0}}^{˜}+{Δ}_{k}{L}_{1}\right) {{\hat{ρ}}_{ss}}^{\left(n-1\right)}$ discussed above.

Here again, for a given set of parameters *pₖ*, the same formula will have to be used for all members of the steady state basis.

The candidate steady state*ρ̂*ₖ is then determined in an operation 510 which is almost identical to operation 410, except that not all members of the steady state basis are used (except if iteration index n is equal to *N*₀).

Thereafter, a check is then performed in an operation 520 which is identical to operation 420. If the check is positive, then *ρ̂ₖ* and its corresponding set of parameters *pₖ* are stored in a table Ro[] in an operation 530 identical to operation 430. If the check is negative, then the iteration index is tested in an operation 535 to check whether the full steady state basis has been computed. If that is the case, then it means that the set of parameters *pₖ* is not within the radius of convergence of the VPT for the initial point *p*₀ and that the steady state for the set of parameters *pₖ* will have to be determined using another initial point in an operation 540 identical to operation 440. If that is not the case, then the loop is repeated with the increase of the iteration index n in operation 502.

The person skilled in the art will identify that, while the example of figure 5 provides a "one by one'" iterative VPT, it could also be performed by generating an arbitrary number of steady state basis members (2, 3, or another integer such as a divisor number of *N*₀). In that case, only operation 502 and 506 need to be adapted to take into account that several steady state basis members are computed with each iteration. Still alternatively, the number of steady state members computed during each iteration could be variable, i.e. based on the result of operation 520 of the previous iteration.

Once operation 220 is over, the next set of parameters *pₖ* can be obtained from operation 210, and its steady state can be determined by operation 220 etc. Again, some or all of the operations 220 for the different sets of parameters *pₖ* may be performed in parallel in order to speed up processing.

Once all steady states have been determined, it is checked in an operation 230 whether the table ReC[] is empty, that is whether all sets of parameters deriving from the span of operation 200 have been associated with a valid computed steady state *ρ̂ₖ* in table Ro[]. If that is not the case, then a new initial set of parameters *p*₀ is chosen within the span of sets of parameters not yet in Ro[] in an operation 240, and the loop restarts with operation 200, the span being updated based on the previous loop.

### G. Multipoint VPT

The Applicant has determined that iterative VPT can be improved once a certain number of sets of parameters have been processed.

Indeed, by using the steady state basis members computed for the same open quantum system for other sets of parameters, it is possible to make the iterative VPT converge more rapidly. This means that operation 510 will take into account not only the steady state basis members computed during its iterations of operation 506, but also some or all of the steady state basis members computed for the same open quantum system for other sets of parameters.

The considered sets of parameters may be associated with the same initial set of parameters *p*₀, or they may be associated with another initial set of parameters *p*₀.

Advantageously, steady state basis members which have lead to a set of parameters *pₖ* being stored in the table ReC[] may be ignored.

For example, the steady state basis members of the two sets of parameters closest to the current set of parameters may be used, or another criterion may be used.

This also allows to treat more efficiently the peculiar points where the system's steady state can change abruptly by minimally changing one of the system's parameters as described above.

If operation 230 shows that the whole span has been explored, device 100 may stop, or it may perform an additional operation of characterization or calibration in an operation 250.

Here, the parameters will be classified as control parameters or characterization parameters. Control parameters are parameters of the physical quantum system which can be made to vary in a controlled manner during the experiment. As described above, they can be a drive frequency, or a flux line voltage of an ATS. Characterization parameters of the physical open quantum system are parameters which do not vary, such as photon loss rate for a buffer or a memory, or quantum gain.

For example, the computed steady states may be used to derive expected physical measurements on the open quantum system. The device 100 can thereafter be used to control the physical quantum system 130 with control parameters which match those associated to the steady states computed by the device. The physical quantity can thereafter be measured on the physical quantum system 130, for some or all of the computed steady states, and compared to their expected values.

The comparison of the measurements and the expected values can be used to modify the characterization parameters of the open quantum system model so as to improve it. The aim is to tweak the variable parameters in the method above until the expected values are close enough to the physical quantity measurements, such that they become fixed parameters. Once there are no variable parameter remaining, the physical quantum system has been fully characterized.

In another example, once characterization has been achieved, that is when the open quantum system model has been calibrated, or when it is deemed close enough, the steady states of this calibrated model can be used to check for optimal operating points. The corresponding control parameters can be used to control the physical quantum system in order to calibrate it. The control parameters determined thanks to the device 100 can then be used as starting points which are very close to the optimal operating point which is sought, thereby greatly reducing the calibration time of the physical quantum system.

The above example make reference to open quantum system hosting cat-qubits.

Figure 3 is provided as an example of such a circuit, which comprises a first non-linear superconducting circuit portion 306 and a non-linear superconducting circuit portion 305 which define respective qubit-hosting structures.

The non-linear superconducting circuit 306 comprises a linear microwave network such that when coupled via a linear coupler 309 to an ATS 308 which acts as an inductive element the non-linear superconducting circuit comprises at least 2 normal modes (or eigenmodes) *a* and *b* at frequency *fₐ* and *f_{b}* which participates in the ATS. This participation means that a portion or the entirety of the mode magnetic energy is stored in the ATS. This participation can be quantified by the zero-point fluctuation of the superconducting phase across the ATS, noted *φₐ* for mode *a* and *φ_{b}* for mode *b*. Among these embodiments, the non-linear superconducting circuit 306 can be a two-mode hybridized system (also known as "galvanic cat", for which the Applicant has filed patent application EP22306815.6 and EP22306816.4) for which two lumped modes couple strongly via the ATS.

When an external DC magnetic field is set such that a 0*mod*2*π*magnetic flux threads one of the loop and a *πmod*2*π* (or conversely), we ensure the ATS Hamiltonian has its "sin sin" form. For clarity, the set-up applying the external DC magnetic field is not drawn on figure 9 but can be applied via 2 bottom mutual inductances of the ATS (e.g. in the form of coplanar waveguide flux lines through which a DC current flows, to thereby generate magnetic fields to thread the loops with a controllable amount of magnetic flux). A typical implementation consists in interleaving a bias-tee connected to a DC current source to input DC current into the system while letting the microwave radiations go through.

Microwave sources are set-up to modulate respectively the common and differential flux in the ATS which is required to activate parametric interactions. These microwave sources are represented by the 0 and π signs in the ATS. When these microwave sources are set at the frequency *fₚ =* |2*fₐ - f_{b}*|, the non-linear superconducting circuit 306 performs the 2-to-1 photon conversion between a first mode a referenced 320 and a second mode *b*referenced 322. To convert this 2-to-1 photon conversion into two-photon dissipation, the mode *b*is selectively coupled to a load (env.) via a linear coupler 312 and microwave filter 318 configured as a band pass filter with a frequency *f_{b}.* Alternatively (and preferably), the filter 318 may be configured as a band stop filter at a frequency *fₐ* using the CPWSFs designed according to the above, and may be placed in between the environment and the two modes to isolate the first mode and thus prevent the first mode from suffering additional losses coming from unwanted coupling to the load (i.e. preventing or minimizing this unwanted energy decay channel). Alternatively, it may be configured as a low-pass (respectively high-pass) filter if *fₐ > f_{b}* (resp *f_{b} > fₐ*). In other embodiments, the microwave filter 318 can be omitted when coupling between the load and substantially only the second mode can be established. Consequently, the man skilled in the art will understand that the first mode *a* has a high-quality factor, and the second mode b has a low-quality factor.

To perform cat qubit stabilization in mode *a*, which requires two-photon drive and dissipation, the *b* mode is eventually driven at its resonant frequency *f_{b}.* This drive is typically performed by a microwave source set at frequency *f_{b},* and typically provided either via a dedicated coplanar waveguide near to the part of the non-linear superconducting circuit 306 referenced 322 where the second mode *b* is concentrated (referred to as the buffer drive line), or via differentially pumping the ATS (via applying the appropriate RF signal through the associated flux lines) at the buffer frequency (as described for instance in: Berdou, Camille, et al. "One hundred second bit-flip time in a two-photon dissipative oscillator" PRX Quantum 4.2 (2023): 020350, doi 10.1103/PRXQuantum.4.020350).

In the following, first mode *a* hosts a cat qubit, and is also known as the cat qubit mode, whereas second mode *b* is used as a buffer in between the cat qubit and the environment.

In the above, all of the microwave sources can be seen as part of a command circuit which is configured to deliver one or more control signals to the qubit-hosting structures.

The non-linear superconducting circuit portion 305 hosts a control qubit. In various embodiments, the control qubit can be any superconducting qubit such as a transmon qubit, a flux-qubit or a fluxonium qubit or any bosonic qubit encoded in a resonator such as a Kerr cat qubit (detuned or not), another stabilized cat qubit device (squeezed or not), a GKP qubit, or a cat qubit confined via a two-photon exchange Hamiltonian.

The control qubit is coupled to the non-linear superconducting circuit portion 306 hosting a target qubit via a small linear coupler 304. The linear coupler 304 is arranged such that the control qubit slightly hybridizes with the cat qubit-hosting the target qubit which leads to a small participation of the control qubit in the ATS 308. This participation is denoted *φ_{q}.* In various embodiments, coupler 304 can be capacitive, inductive, galvanic or mediated via a resonating bus coupler or an additional linear microwave network.

In order to protect the hosted cat qubit (and more generally the hosted bosonic code qubit), the memory resonator can be protected from an energy decay channel from the physical qubit through a nearby coplanar waveguide at the memory frequency (e.g. through the buffer drive line and/or the ATS flux lines) by providing the buffer drive line and/or the ATS flux lines with one or more CPWSFs which stopband is centered on the hosted cat qubit frequency and is configured to act as a Purcell filter on the physical qubit. Purcell filters are disclosed in the articles by Sete et al. "Purcell effect with microwave drive: Suppression of qubit relaxation rate", arXiv:1401.5545 [quant-ph], doi 10.1103/PhysRevB.89.104516 and "Quantum theory of a bandpass Purcell filter for qubit readout", arXiv:1504.06030 [quant-ph], doi 10.1103/PhysRevA.92.012325. In this manner, the qubits are protected from circuit noise.

Furthermore, bosonic qubits are often dynamically stabilized systems. In particular, for cat qubits, it is known that spurious resonant frequencies are turned on when pumps/drives are applied to the system. The articles by Carde, Léon, et al. "Flux-pump-induced degradation of T 1 for dissipative cat qubits" Physical Review Applied 23.2 (2025): 024073, and by Putterman, Harald, et al. "Preserving phase coherence and linearity in cat qubits with exponential bit-flip suppression" arXiv preprint arXiv:2409.17556 (2024) show that it is specifically the case when parametric pump is applied to ATS.

Thus, in order to further protect the hosted cat qubit (and more generally the hosted bosonic code qubit), the memory resonator can be protected from other energy decay channels at such parametrically activated spurious resonant frequencies by providing the buffer drive line and/or the ATS flux lines (or indeed, other coplanar waveguide control lines associated with the qubit) with one or more CPWSFs which stopband is centered on one of the spurious resonant frequencies. As can be appreciated, for multiple different spurious resonant frequencies, multiple different CPWSFs can be provided. In this manner, the qubits are further protected from circuit noise.

For the sake of completeness, cats qubits will be described in more detail below.

### H. Biased-noise qubits

Stabilized cat qubits are known to benefit from a noise bias. More precisely, an effective error channel (e.g., bit errors or "bit flips") is suppressed in an exponential way with the "size" - i.e., the average number of photons - of the Schrödinger cat states of the cat qubits. Other qubits are known to benefit from a noise bias, such as two-photon exchange qubits (as disclosed by Pop et al. "Coherent suppression of electromagnetic dissipation due to superconducting quasiparticles", Nature 508, 369-372, 2014, doi 10.1038/nature13017).

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states. Because of this noise structure, it is considered that the use of a single repetition code is sufficient to correct the remaining error channel. Indeed, if one wishes to correct only the phase jump, it is sufficient to just use a phase jump error correction code. This can be, for example a repetition code defined in the dual base, or any other classical error correction code.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

### I. Cat qubits

Part of the Applicant's research in the past years has concerned with the stabilization of cat qubits. In *"*Exponential suppression of bit-flips in a qubit encoded in an oscillator", Nature Physics, 2020, R. Lescanne *et al.* demonstrated that cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $\left|{C}_{α}^{\pm }\right〉$ which are superpositions of two coherent states |*α*〉 and |-*α*〉: $\left|{C}_{α}^{\pm }\right〉 = {N}^{\pm } \left(\left|α\right〉\pm \left|-α\right〉\right)$ with ${N}^{\pm } = \frac{1}{\sqrt{2 \left(1\pm {e}^{- 2 {\left|α\right|}^{2}}\right)}}$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons *n̅ =* |*α*|² - of the Schrödinger cat states of the cat qubits. As previously mentioned, this exponential suppression of bit-flip errors is only at the cost of linear increase of phase-flip errors.

### J. Stabilization schemes

Cat qubits can be stabilized or confined by the following exemplary schemes:
a) a parametric dissipative stabilization, with jump operator ${L}_{2} = \sqrt{{κ}_{2}} \left({a}^{2}-{α}^{2}\right)$, where *κ*₂ is the two-photon dissipation rate, *a* is the photon annihilation operator and *α* is a complex number defining the cat qubit. This jump operator can be realized by coupling a lossy buffer mode b with dissipation rate *κ_{b}*, and a four-wave mixing device - typically a Josephson junction, an ATS or a DC bias coupled to Josephson junctions - to the cat qubit mode a and by engineering the Hamiltonian $\frac{H}{ℏ} = {g}_{2} \left({a}^{2}-{α}^{2}\right) {b}^{†} + h . c .$*,* where *b* is the photon annihilation operator of the buffer mode b and *g*₂ is the two-photon coupling rate, by applying to the four-wave mixing device a pump at frequency |2*fₐ - f_{b}*| and a drive of the buffer mode at frequency *f_{b}* provided *g*₂ < *κ_{b}.*
b) a Kerr Hamiltonian $\frac{H}{ℏ} = \frac{K}{2} \left({a}^{† 2}-{α}^{2}\right) \left({a}^{2}-\overline{{α}^{2}}\right)$*,* where *K* is the amplitude of the Kerr Hamiltonian, *a* is the photon annihilation operator, and |α|² is the mean photon number.
c) a detuned Kerr Hamiltonian $\frac{H}{ℏ} = \frac{K}{2} \left({a}^{† 2}-{α}^{2}\right) \left({a}^{2}-\overline{{α}^{2}}\right) - {Δa}^{†} a$*,* where *K* is the amplitude of the Kerr Hamiltonian, a is the photon annihilation operator, *α* is a complex number defining the cat qubit, and *Δ* is the detuning factor.
d) a two-photon exchange (TPE) Hamiltonian $\frac{H}{ℏ} = {g}_{2} \left({a}^{2}-{α}^{2}\right) {σ}_{+} + h . c .$*,* where *g*₂ is the complex two-photon coupling rate, *α* is the photon annihilation operator, *α* is a complex number defining the cat qubit, and σ_{±} are the lowering and raising operators of the two-level system. This Hamiltonian can be engineered in the same way as the parametric dissipative stabilization a).
e) a dissipative squeezing stabilization, with jump operator ${L}_{SC} = \sqrt{{κ}_{SC}} \left(\left(cosh\left(r\right)a+\right.\right.$ *sinh*(*r*)*e^{iθ}a*^{†})² - *α*²), where *κ_{SC}* is the squeezed two-photon dissipation rate, *a* is the photon annihilation operator, *α* is a complex number defining the cat qubit, *r* and *θ* are the modulus and argument of the complex squeezing parameter *ξ = re^{iθ}.* This jump operator can be realized by coupling a lossy buffer mode b with dissipation rate *κ_{b}*, and a four-wave mixing device - typically a Josephson junction or an ATS -, to the cat qubit mode a and by engineering the Hamiltonian $\frac{H}{ℏ} = {g}_{SC} \left({\left(cosh\left(r\right)a+sinh\left(r\right){e}^{iθ}{a}^{†}\right)}^{2}-\right.$ *α*²)*b*^{†} *+ h.c.,* where b is the photon annihilation operator of mode b and *g_{sc}* is the squeezed two-photon coupling rate, with several pumps at frequencies |2*fₐ - f_{b}*|, *f_{b}* and *2fₐ + f_{b},* and a drive of the buffer mode b at frequency *f_{b}* provided *g_{sc} < κ_{b}.*
f) a variant of the previous stabilization scheme e), for which the Applicant filed the European patent application EP 23175147.0, in which a bosonic qubit - called "*moon cat qubit"* since the two blobs of the Wigner function have a crescent moon shape - is stabilized by engineering the Hamiltonian $\frac{H}{ℏ} = {g}_{2} \left({a}^{2}+{λa}^{†}a-{α}^{2}\right) {b}^{†} + h . c .$*,* where *g*₂ is the amplitude of a pump at frequency |2*fₐ - f_{b}*|, *a* is the annihilation operator of the cat qubit mode a, *λ* is a complex number which phase and amplitude result from the amplitude of longitudinal coupling produced by a pump at frequency *f_{b}, α* is a complex number resulting from a drive of the buffer mode b at frequency *f_{b}* and b is the annihilation operator of the buffer mode b; a comparison between the moon cat qubit and the squeezed cat qubit could be established by expressing *λ* as a function of the complex squeezing parameter *ξ* = *re^{iθ}* as follows: *λ* = 2 tanh(*r*).
g) a resonant dissipative stabilization, with jump operator ${L}_{2} = \sqrt{{κ}_{2}} \left({a}^{2}-{α}^{2}\right)$, where *κ*₂ is the two-photon dissipation rate, *α* is the photon annihilation operator and *α* is a complex number defining the cat qubit. This jump operator can be realized by coupling a lossy buffer mode b with dissipation rate *κ_{b}*, and a three-wave mixing device to the cat qubit mode a which engineers the Hamiltonian $\frac{H}{ℏ} = {g}_{2} \left({a}^{2}-{α}^{2}\right) {b}^{†} + h . c .$*,* where b is the photon annihilation operator of the buffer mode b provided the mode frequencies verify substantially 2*fₐ = f_{b}* and *g*₂ < *κ_{b}* to which a drive of the buffer mode at frequency *f_{b}* is added.

### K. Use of the device for characterization of a memory-buffer system

Taking into account the exemplary circuit of figure 3, the device 100 can be used to characterize parts of this circuit.

Indeed, focusing on the memory-buffer system of this circuit, consists of a memory mode *â* and a buffer mode *b̂* that are parametrically coupled through a term *g*₂ that converts a photon in the buffer into two photons in the memory.

The Hamiltonian reads: *Ĥ* = *-*Δ*ₐâ*^{†}*â* - Δ*_{b} b̂*^{†}*b̂ + g*₂(*â*²*b̂*^{†} *+ h.c.*) *+* (F*b̂ + h.c.*)*-Kₐâ*^{†}*â*^{†}*ââ-K_{b} b̂*^{†}*b̂*^{†}*b̂b̂ + χâ*^{†}*âb̂*^{†}*b̂,*
where Δₐ (respectively Δ_{b} ) is the detuning between the drive and the memory (respectively the buffer), Ka (respectively Kb) is the Kerr nonlinearity, and F is the drive amplitude acting on *b̂*. Both modes dissipate photons at rates *κₐ* and *κ_{b}*, and the Lindblad master equation reads 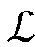 *ρ̂*(*t*) *= -i*[*Ĥ, p*(*t*)] *+ κₐD*[*â*] + *κ_{b}D*[*b̂*]*.*

In an ideal configuration to generate cats, Δ*ₐ=* Δ*_{b}=* 0, and $\frac{1}{{κ}_{b}}$ is the shortest timescale. Schrödinger cat states persist over times determined by the loss of parity at a rate *κₐ*〈*â*^{†}*â*〉*.*

Several parameters of the Hamiltonian can be directly measured in experiments [22]. The detuning Δ*ₐ* and Δ*_{b}* are controlled by the relative frequencies of the driving mechanisms. *K_{b}* and *κ_{b}* can be inferred by probing the b mode that has a dedicated measurement and feedline. Since it is possible to prepare the states |0〉 or |1〉 in the memory through the combined action of drive, pulses, and dissipation, *χ* can be inferred by comparing spectroscopy measurements on the *b̂* mode with the memory in states |0〉 or |1〉. Similarly, *κₐ* can be extrapolated as the decay rate of a state Fock |1〉.

The remaining parameters are not straightforward to measure and require more advanced fitting procedures. Although all these parameters affect the spectroscopic response of the buffer mode, there are no closed or analytical expressions that one can use to fit the quantum system's response.

The device 100 allows to fit the system response and indirectly extract these parameters.

Indeed, in experiments, a common measurement is the spectroscopical response of the buffer defined by ${S}_{21} = 1 - \frac{{iκ}_{b} \left〈\hat{b}\right〉}{F}$. Thus, the fitting can be performed by first picking a set of unknown parameters *g*₂, *F*, and *Kₐ*, and use device 100 to generate *S*₂₁ as a function of Δ*ₐ* and Δ*_{b}*. To mimic experimental imperfections, Gaussian noise can be added to the data.

Thereafter, starting from an initial random guess of *g*₂, *F*, and *Kₐ* and assuming the remaining parameters are known, an attempt is made to try to recover the parameters used in the initial simulation using the an L-BFGS optimizer.

At each step, the cost function *ϕ_{fit} = min_{ϕ}* Σ*_{θ}* |〈Δ*ô*(*ϕ*, *θ*)〉|² where 〈Δ*ô*(*ϕ, θ*)〉 *= 〈ô*(*ϕ, θ*)〉 *- oₓₚ*(*θ*) *,* 〈*ô*(*ϕ*, *θ*)〉 = *Tr*[*ρ̂ₛₛ*(*ϕ, θ*)*ô*] *, ϕ* represents a constant unknown parameter, *θ* is the controllable parameter of the experiment, ô is the operator for calculating the expected values, and *oₓₚ* are the obtained measurements. This can be done using the VPT gradient estimate.

Figure 6 shows the map of *S*₂₁ computed at various steps of the optimization. As shown in figure 7, the parameters are recovered with high accuracy within 15 iterations, though noise introduces small deviations and prevents the loss function from reaching zero.

In the above, cat qubits have been the main example discussed, but it should be kept in mind that the invention applies to any biased-noise qubit having a dissipative stabilization scheme, and more generally to any open quantum system described by a Lindblad master equation.

## Claims

1. Computer implemented method for calculating a plurality of steady states of an open quantum system, wherein said open quantum system is a physical quantum system being governed by a Lindblad master equation of the type $\frac{d}{dt} \hat{ρ} \left(t\right) = L \hat{ρ} \left(t\right) =$ $\frac{- i}{ℏ} \left[H, \hat{ρ}\right] + {\sum }_{υ} \left({L}_{υ}\hat{ρ}{L}_{υ}^{†}-\frac{1}{2}\left({L}_{υ}^{†}{L}_{υ}\hat{ρ}+\hat{ρ}{L}_{υ}^{†}{L}_{υ}\right)\right)$ where ℏ is the reduced Planck constant, i is the imaginary unit, with *i*² = -1, *H* is the Hamiltonian of the open quantum system, with [H, *ρ̂*] *= Hρ̂ - ρ̂H, L_{υ}* is the *υ*-th Lindblad operator - or jump operator, ${L}_{υ}^{†}$ is the conjugate transpose of the v-th Lindblad operator, and 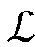 is the Liouvillian superoperator which generates the Liouvillian dynamics, said Lindblad master equation being parametrized by a set of parameters *p* which characterize the physical quantum system and comprise fixed parameters and variable parameters, said method comprising the following operations:
a) based on an initial set of parameters *p*₀, reformulating (200) said Linblad master equation in the form 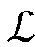 (*p*) *=* 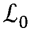 *+ Δₚ* 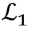 where *p = p*₀ *+ Δp,* 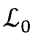 *=* 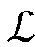 (*p*₀), and 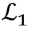 is a Liouvillian,
b) summing the trace superoperator *T* with a chosen complex coefficient *b* to 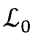 , to obtain ${{L}_{0}}^{˜}$, and performing (210) a LU decomposition or an incomplete LU decomposition of ${{L}_{0}}^{˜}$,
after operation b), for each of a plurality of parameters sets {*pₖ*}*ₖ* such that *pₖ = p*₀ *+ Δₖ,*
c) computing (220) a candidate steady state *ρ̂ₖ* by
c1) determining a steady state basis {*ρ̂ₛₛ*^{(*n*)}}*ₙ*, where *n* is an integer smaller than a chosen maximum number *N*₀ of basis members, in which the first member is derived from *b* or *Δₖ*, and all basis members respect the condition ${{L}_{0}}^{˜} {{\hat{ρ}}_{ss}}^{\left(n\right)} =$ 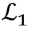 *ρ̂ₛₛ*^{(*n*-1)} or ${{L}_{0}}^{˜} {{\hat{ρ}}_{ss}}^{\left(n\right)} = \left({{L}_{0}}^{˜}+{Δ}_{k}{L}_{1}\right) {{\hat{ρ}}_{ss}}^{\left(n-1\right)}$ for n>0, using the LU decomposition from operation b),
c2) computing said candidate steady state *ρ̂ₖ* = Σₙ *cₙ ρ̂ₛₛ*^{(*n*)} for the parameter set *pₖ* by determining the set of coefficients {*cₙ*}*ₙ* minimizing the equation $\left‖{{L}_{0}}^{˜}{\hat{ρ}}_{k}+\right.$ *Δpₖ* 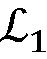 *ρ̂*ₖ *- B*∥*,* where *B =* [*b*; 0; ... ; 0],
d) based on the value of ∥(*p*₀ *+ Δpₖ*)*ρ̂ₖ - B*∥*,* returning *ρ̂ₖ* as the steady state for the parameter set *pₖ*, or else storing parameter set *pₖ* as a parameter set to be computed with another initial set of parameters.

2. Computer implemented method according to claim 1, in which operation c1) comprises computing all steady state basis members until *N*₀ - 1, and operation d) comprises returning *ρ̂ₖ* as the steady state for the parameter set *pₖ* if the value of ∥(*p*₀ *+ Δpₖ*)*ρ̂ₖ - B*∥ is lower than a chosen threshold.

3. Computer implemented method according to claim 1, in which:
- operation c1) comprises determining at least one steady state basis member *ρ̂ₛₛ*^{(*n*)}*,*
- operations c1) and c2) are repeated with an increased value of n by the number of steady state basis members determined in operation c1), until the value of ∥ 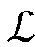 (*p*₀ *+ Δpₖ*)*ρ̂ₖ - B*∥ is lower than a chosen threshold and return *ρ̂*ₖ as the steady state for the parameter set *pₖ* in operation d), or until *n* = *N*₀ and store parameter set *pₖ* as a parameter set to be computed with another initial set of parameters in operation d).

4. Computer implemented method according to claim 3, further comprising:
e) after all of the plurality of parameters sets {*pₖ*}*ₖ* associated with a given initial set of parameters have been treated, if there remains set of parameters to be computed with another initial set of parameters:
e1) determine another initial set of parameters,
e2) repeat operations a) to d) with the initial set of parameters of operation e1).

5. Computer implemented method according to claim 3, in which in operation e2), repeating operation c2) comprises using the steady state basis members associated with the initial set of parameters of operation e1), as well as at least one of all the other steady state basis members associated with another initial set of parameters.

6. Computer implemented method according to one of the preceding claims, in which the set of parameters comprise characterization parameters which are the same for all sets of parameters, and control parameters which are variable, the method further comprising:
f) controlling (250) a physical quantum system with the control parameters of a set of parameters for which a steady state has been determined, and measuring a physical quantity on said physical quantum system,
g) comparing the measured physical quantity of operation f) with a value derived from the steady state associated with the set of parameters of operation f),
h) based on the result of operation g), modifying said characterization parameters and repeating operations f) and g) until the comparison of operation g) is lower than a threshold value.

7. Computer implemented method according to one of the preceding claims, in which the set of parameters comprise characterization parameters which are the same for all set of parameters, and control parameters which are variable, the method further comprising:
i) controlling (250) a physical quantum system with the control parameters of a set of parameters for which a steady state has been determined, and measuring a physical quantity on said physical quantum system,
j) comparing the measured physical quantity of operation f) with a value derived from the steady state associated with the set of parameters of operation f),
k) based on the result of operation j), modifying said control parameters and repeating operations i) and j) until the comparison of operation j) is lower than a threshold value.

8. A device comprising: an open quantum system, wherein said open quantum system is a physical quantum system being governed by a Lindblad master equation of the type $\frac{d}{dt} \hat{ρ} \left(t\right) = L \hat{ρ} \left(t\right) = \frac{- i}{ℏ} \left[H, \hat{ρ}\right] + {\sum }_{υ} \left({L}_{υ}{ρL}_{υ}^{†}-\frac{1}{2}\left({L}_{υ}^{†}{L}_{υ}\hat{ρ}+\hat{ρ}{L}_{υ}^{†}{L}_{υ}\right)\right)$ where ℏ is the reduced Planck constant, i is the imaginary unit, with *i*² = -1, *H* is the Hamiltonian of the open quantum system, with [H, *ρ*] *= Hρ - ρH, L_{υ}* is the *υ*-th Lindblad operator - or jump operator, ${L}_{υ}^{†}$ is the conjugate transpose of the *υ*-th Lindblad operator, and 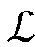 is the Liouvillian superoperator which generates the Liouvillian dynamics, said Lindblad master equation being parametrized by a set of parameters *p* which characterize the physical quantum system and comprise fixed parameters and variable parameters, said device further comprising a command circuit configured to send one or more control signals to control the quantum system, wherein the device is further configured to perform the method of one of claims 1 to 7.

9. Device according to claim 8, wherein said open quantum system comprises one or more cat qubit.

10. A computer program product (120) comprising instructions (122) which, when executed by processing circuitry (102), causes the device of claim 8 or 9 to carry out the method according to one of claims 1 to 7.

11. A computer-readable medium having stored thereon the computer program product of claim 10.
